# EUROPEAN PATENT SPECIFICATION

(11) **EP 3 206 511 B1**
(45) Date of publication and mention of the grant of the patent: **15.05.2019**
(21) Application number: 15775643.8
(22) Date of filing: 21.09.2015
(51) Int. Cl.: A24C 5/34, A24C 5/345, G01B 11/25, H04N 5/225

(54) **METHOD AND DEVICE FOR DETECTION OF ROTATED SEGMENTS CONVEYED IN A MACHINE USED IN TOBACCO INDUSTRY AND A MACHINE FOR PRODUCING MULTISEGMENT RODS COMPRISING SUCH A DEVICE**
VERFAHREN UND VORRICHTUNG ZUM NACHWEIS GEDREHTER SEGMENTE IN EINER MASCHINE IN DER TABAKVERARBEITENDEN INDUSTRIE UND MASCHINE ZUR HERSTELLUNG MULTISEGMENTIERTER STANGEN MIT SOLCH EINER VORRICHTUNG
PROCÉDÉ ET DISPOSITIF DE DÉTECTION DE SEGMENTS TOURNÉS TRANSPORTÉS DANS UNE MACHINE UTILISÉE DANS L'INDUSTRIE DU TABAC ET MACHINE POUR PRODUIRE DES TIGES À PLUSIEURS SEGMENTS COMPRENANT UN TEL DISPOSITIF

(30) Priority: 17.10.2014 PL 40980814
(43) Date of publication of application: 23.08.2017
(73) Proprietor: International Tobacco Machinery Poland Sp. z o.o., 26-600 Radom (PL)
(72) Inventor: STANIKOWSKI, Robert, PL-26-600 Radom (PL); CZAJKA, Piotr, PL-26-600 Radom (PL)
(74) Representative: Patpol Kancelaria Patentowa Sp. z o.o.
(86) International application number: PCT/EP2015/071560
(87) International publication number: WO 2016/058786

(56) References cited:
- EP-A1- 2 183 985
- WO-A1-2014/166944
- WO-A2-2004/017099
- DE-A1- 3 915 836

## Description

This invention relates to a method and a device for detection of rotated segments conveyed in a tobacco industry machine.

The invention also relates to a machine for producing multisegment rods comprising the device according to the invention.

The cigarettes produced in the tobacco industry are provided with filters made of one kind of a filtering material or of several kinds of materials having diverse physical properties. Filters composed of several segments having diverse physical properties are used increasingly often.

Machines for the production of individual rods combine many different segments that are delivered by numerous feeding devices, the segments being formed by cutting the filter rods conveyed by e.g. a drum conveyor, by means of a cutting head equipped with disc knives as disclosed for example in WO 2009/074540 A1.

The segments are arranged one after another so as to form an endless multisegment rod which is finally cut into individual multisegment rods.

Methods of forming multisegment rods from numerous segments and the multisegment rods that are cut into multisegment rods by means of a cutting head are known from EP 1763306 B1. During further steps of a cigarette production process the multisegment rods are cut into individual multisegment filters applied into individual cigarettes.

Quality of the multisegment rods constitutes an important aspect of their production. High quality is attained by maintaining precise dimensions of the segments, e.g. their diameters and lengths, as well as by maintaining a defined sequence of the segments and the clearances between them.

It is also important to keep the segments correctly aligned with their axes aligned with the axis of the produced rod. At present, increasingly short segments are used by the cigarette producers e.g. the segments having their length close to their diameter. Filters are also known having the filters of a length smaller than their diameter, e.g. 5 mm or less.

In the case of the above proportions a risk exists that the segment gets rotated in such a way that its axis becomes non-parallel, e.g. transversal to the axis of the rod in which it is located.

The above is possible when the dimensions of the space designated in a rod for such a segment enable a slightly deformed segment to be oriented both in parallel and substantially perpendicularly to the axis of the rod.

A slanted orientation of such a segment in relation to the axis of the rod is also possible; the deformation of the segment is then more pronounced, the direction and angle of rotation of the segment in relation to the rod being totally random.

Both the rotated segment and the material wrapping the multisegment rod get deformed, the deformation depending on the contour of the rotated segment. In other words, the rotation of the segment results in that the produced rod undergoes deformation to some extent which means that the rod is not cylindrical in the area of the incorrectly positioned segment.

A method and a device for detection of rotated segments by means of detecting a wrapping material deformation is known from the application PL 403464, subsequently disclosed in WO2014/166944 (which claims priority from PL 403464), both filed in the name of the current applicant. However, it turned out that in the case of a stiff and/or thick wrapping material, a rotated segment does not cause the deformation of the rod but the segment gets squeezed instead, following the cylindrical shape of the wrapping material. In such case, the multisegment rods containing the rotated segments should be rejected from the production process.

Another disadvantage of the known devices of the described type consists in that the reliability of their operation may only be satisfactory when the rods are conveyed with a limited speed.

It is an object of the present invention to provide a method, a device and a machine for a reliable and fast detection of rotated segments in a string of segments before said string gets wrapped in a wrapping material, so that the rods containing any rotated segments may be rejected from a string of cut multisegment rods.

It is also an object of the present invention to provide a method, a device and a machine of the above described type, in which the detection is possible when the rods are conveyed with a relatively high speed, even in a range of 500 m/min.

The present invention relates to all finished and semifinished products of tobacco industry, e.g. multisegment filter rods containing filter segments, multisegment filter rods containing filter segments and additional components for modifying or imparting aroma, multisegment filter rods containing filter segments and additional objects for modifying filtering proprieties of the used materials, multisegment filter rods containing both filter segments and non-filter segments, multisegment articles having a lowered tobacco content, as well as to cigarettes with an attached single or multi segment mouthpiece. The segments contained in the rods may be arranged directly one after another or with gaps between them.

According to the invention a method is provided for detection of rotated segments in a non wrapped string of segments conveyed one after another in a machine used in tobacco industry, the method comprising using a source of radiation for illuminating the segments and a receiver of the radiation reflected by the segments, the method further comprising generating a signal of error by means of a controlling unit in case of detection of a rotated segment.

The method according to the invention is characterized in that the conveyed string of the segments is illuminated by a laser beam so that on each segment its light profile is formed, an image of said light profile being registered by means of the radiation receiver, and in that the light profile formed on each segment is compared with a defined reference profile by means of an analyzing unit and the signal of an error is generated in each case where a difference between the registered light profile and said reference profile is detected.

The string of the segments is preferably illuminated by a laser beam having a shape selected from a group comprising a flat beam, a beam having an arcuate cross-section and a beam of a shape of a segment of an ellipse.

The string of the segments is preferably illuminated by a laser beam that is perpendicular to the direction of travel of the string of the segments, the beam being optionally oriented at an angle to the direction of travel of the string of the segments.

In a preferred embodiment of the invention, the string of the segments is preferably illuminated by a laser beam having an elliptical shape, the laser beam being oriented at an angle between 30° a 60° to the direction of travel of the string of the segments, the radiation receiver registering the radiation reflected by each segment at an angle between 30° and 60° to the direction of travel of the string of the segments.

Particularly preferably, the string of the segments is illuminated by a laser beam having an elliptical shape, the laser beam being oriented at an angle of 45° to the direction of travel of the string of the segments, the radiation receiver registering the radiation reflected by each segment at an angle of 45° to the direction of travel of the string of the segments.

The image of the light profiles of the segments is preferably registered by means of a camera.

According to the invention a device is provided for detection of rotated segments in a non-wrapped string of segments conveyed one after another in a machine used in tobacco industry, the device comprising a source of radiation, a receiver of the radiation reflected by the segments and a controlling unit for generating signals of an error.

The device according to the invention is characterized in that the source of radiation is adapted to illuminate the conveyed string of the segments by a laser beam so that on each segment its light profile is formed, and in that the radiation receiver is adapted to register the image of said light profile formed on each segment, the controlling unit being associated with an analyzing unit adapted to compare the light profile formed on each segment with a defined reference profile and the controlling unit being adapted to generate a signal of an error in each case where a difference between the registered light profile and said reference profile is detected.

Preferably, the source of radiation is adapted to generate a laser beam having a shape selected from a group comprising a flat beam, a beam having an arcuate cross-section and a beam of a shape of a segment of an ellipse.

The source of radiation may be adapted to generate a laser beam that is perpendicular to the direction of travel of the string of the segments, the beam being optionally oriented at an angle to the direction of travel of the string of the segments.

In a preferred embodiment, the source of radiation is adapted to generate a laser beam having an elliptical shape, the laser beam being oriented at an angle between 30° and 60° to the direction of travel of the string of the segments, the radiation receiver registering the radiation reflected by each segment at an angle between 30° and 60° to the direction of travel of the segments.

Particularly preferably, the source of radiation is adapted to generate a laser beam having an elliptical shape, the laser beam being oriented at an angle of 45° to the direction of travel of the string of the segments, the radiation receiver registering the radiation reflected by each segment at an angle of 45° to the direction of travel of the string of the segments.

The radiation receiver is preferably a camera.

According to the invention a machine used in tobacco industry is provided for producing multisegment rods comprising means for feeding the segments, means for feeding wrapping material, means for conveying a string of the segments located on the wrapping material, means for forming an endless multisegment rod by enclosing the string of the segments by the wrapping material, the machine further comprising a cutting assembly for cutting the endless rod into individual multisegment rods and a machine controlling unit.

The machine according to the invention is characterized in that upstream of the means for forming an endless multisegment rod a device for detection of rotated segments according to the invention is provided, the controlling unit of the device according to the invention being associated with the machine controlling unit, the machine being further provided with a rejecting assembly for rejection of the rods containing the detected rotated segments.

Due to the fact that the detection of the rotated segments according to the invention is realized before the string of the segments gets enclosed within the wrapping material, all the rotated segments may be detected even though some of them get deformed and become invisible when enclosed in the final multisegment rod. The association of the controlling unit of the device for detection with the machine controlling unit enables the rods containing the rotated segments to be rejected once the multisegment rod has been cut into individual rods.

Also, due to the fact that according to the invention only one source of radiation is used generating just one image of the light profile of each segment, the amount of data to be processed by the unit analyzing the light profiles of the individual segments is relatively small. Therefore, the operation of the controlling unit of the device for detection and hence of the whole machine, is importantly accelerated.

The above advantage is most pronounced when the elliptical laser beam is used, i.e. a laser beam of a shape of a segment of an ellipse, oriented at an angle between 30° and 60° to the segment.

If such is the case and the radiation receiver is positioned at an appropriate angle adjusted to the plane of the light profile formed on a segment, then in the case of the segments that are not rotated, the image registered by the receiver is a straight line segment.

Hence, the analyzing unit that compares the light profiles of the individual segments which are not rotated with the reference profile, and the controlling unit of the device, they both process a relatively small amount of data and therefore they operate quite quickly in the case of the regular (not rotated) segments.

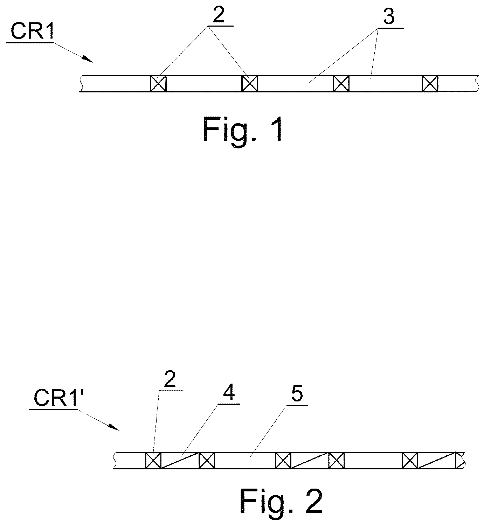

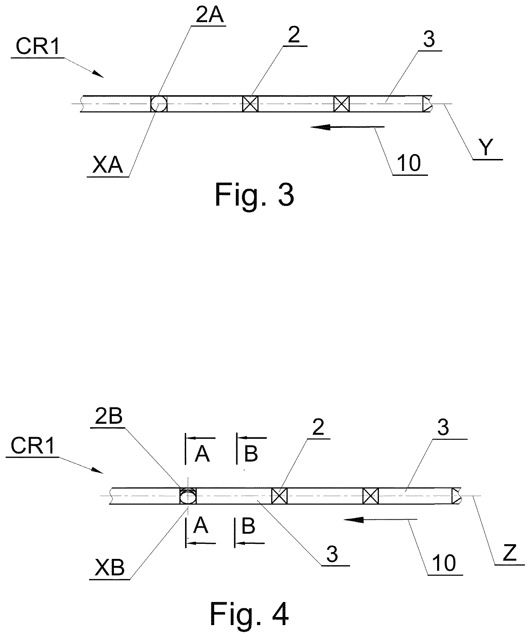

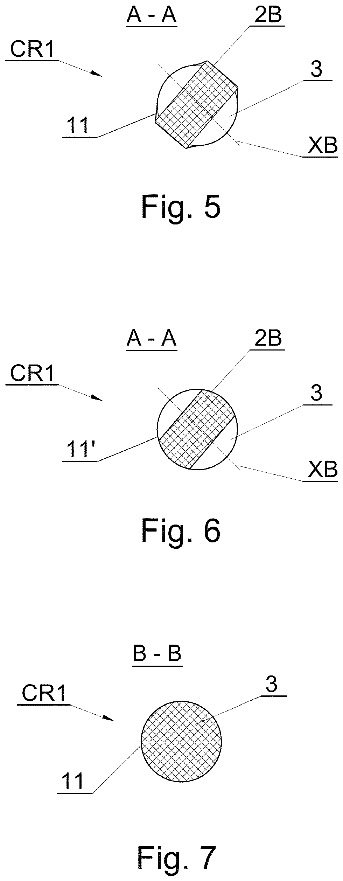

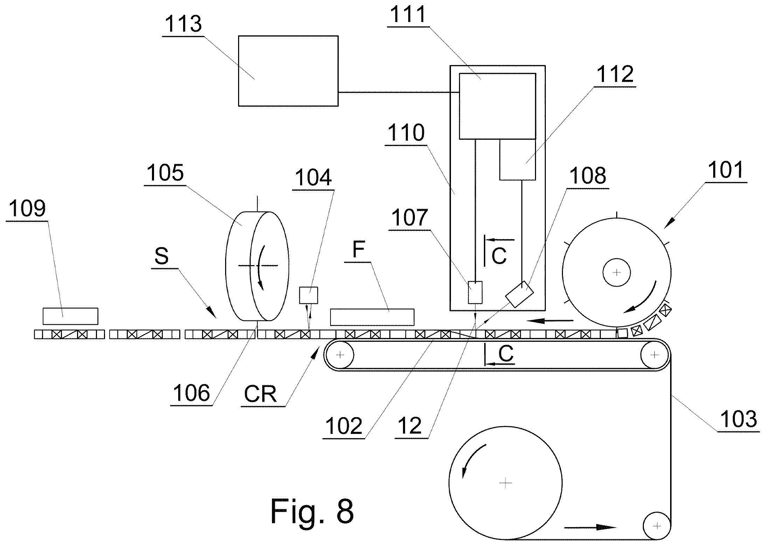

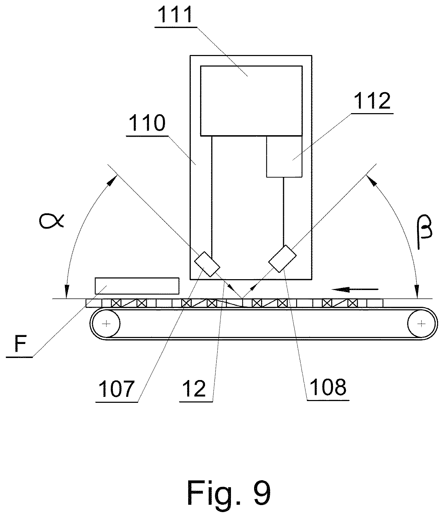

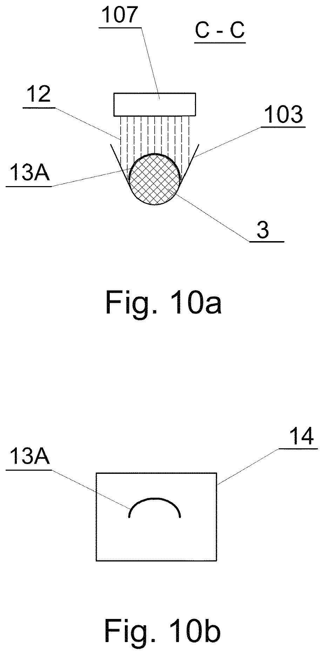

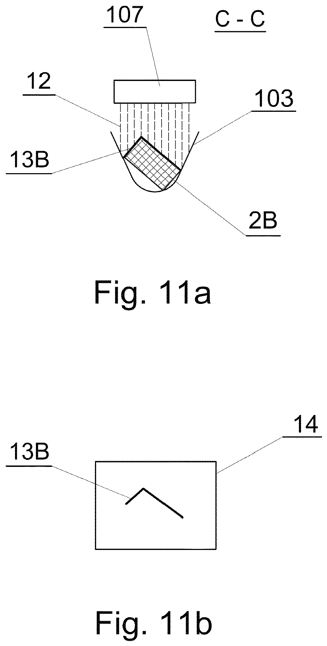

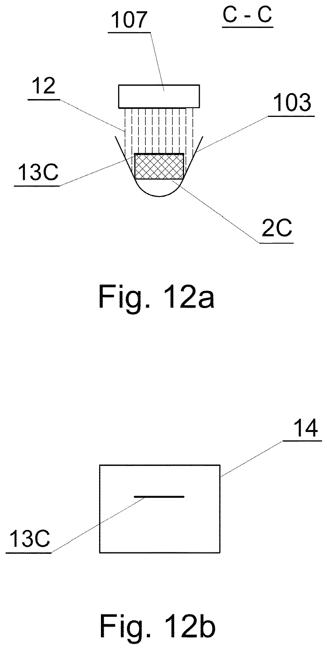

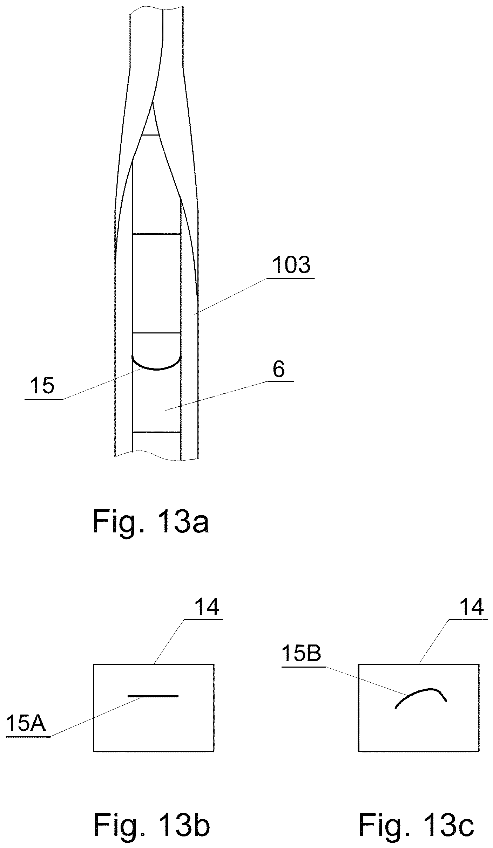

Preferred embodiments of the invention have been further described with reference to the appended drawing in which: fig. 1 shows an exemplary endless multisegment filter rod; fig. 2 shows another exemplary endless multisegment filter rod; fig. 3 shows the rod of fig. 1 with a rotated segment; fig. 4 shows the rod of fig. 1 with a differently rotated segment; fig. 5 shows a cross-section along the plane A-A of the rotated segment contained in the rod of fig. 4 having a thin wrapping material; fig. 6 shows a cross-section along the plane A-A of the rotated segment contained in the rod of fig. 4 having a stiff wrapping material; fig. 7 shows a cross-section along the plane B-B of the non-rotated segment contained in the rod of fig. 4; fig. 8 schematically shows a fragment of a machine for producing multisegment rods according to the invention; fig. 9 schematically shows a device for detection according to the invention; fig. 10a schematically shows a view, taken along the axis of the string of the segments, of the light profile formed by a flat laser beam on a non-rotated segment; fig. 10b shows a light profile formed by a flat laser beam on a non-rotated segment of fig.10a and registered by the radiation receiver; fig. 11a shows a view similar to fig. 10a, with the light beam striking a rotated segment; fig. 11b shows a light profile of a rotated segment of fig. 11a, registered by the radiation receiver; fig. 12a shows a view similar to fig. 11a, with the light beam striking a rotated segment differently than in fig. 11a; fig. 12b shows a light profile of a rotated segment of fig. 12a, registered by the radiation receiver; fig. 13a schematically shows a top view taken transversally to the axis of the string of the segments, of the wrapped segments, a light profile formed by an elliptical light beam being visible on one segment; fig. 13b shows a light profile of a non-rotated segment of fig. 13a, registered by the radiation receiver; fig. 13c shows an exemplary light profile of a rotated segment struck by an elliptical light beam, registered by the radiation receiver.

Figs. 1 and 2 schematically show the fragments of exemplary endless multisegment filter rods CR1, CR1' comprising alternating segments 2 and 3 in fig. 1 and segments 2, 4 and 5 in fig. 2, the segments being any known cylindrical segments, solid or hollow, made of diverse materials. The segments are enclosed in a common wrapping, in particular a paper wrapping material. The multisegment rods shown in the figures look like the wrapping material were transparent.

The segment 2 is the shortest of the segments of both examples shown in figs. 1 and 2, its length being close to the diameter of the filter rod. It may happen during the production process of the multisegment rod that such short segments accidentally get rotated.

In figs. 3 and 4 these rotated segments are referenced as 2A and 2B. The axial direction of travel of the rod during the production process is indicated with an arrow 10. The axis Y of the multisegment rod CR1 in fig. 3 lies in the plane of the drawing, while the axis XA of the rotated segment 2A is oriented perpendicularly to the plane of the drawing. In fig. 4, the axis XB of the segment 2B is slanted in relation to the plane of the drawing and perpendicular to the axis Z; the axis XB may also be oriented at an angle to the axis Z.

Figs. 5, 6 and 7 show the cross-sections A-A and B-B of the segments 2B and 3 shown in fig. 4. Fig. 6 shows a situation where the wrapping material 11' is stiff enough not to deform, while the segment has got squeezed and adapted to the cylindrical shape of the wrapping material 11'. In fig. 7 the wrapping has a circular cross-section corresponding to the circular cross-section of the segment 3 enclosed in the cylindrical wrapping.

As it may be seen in fig. 8 showing a fragment of the machine according to the invention for producing multisegment rods S from the rods CR1, CR1', a feeding assembly 101 delivers conventionally pre-prepared filter segments to a conveyor 102 on the surface of which a wrapping paper 103 is disposed. While the segments are transported on the conveyor 102, the wrapping paper 103 is being coiled around them and glued in a formatting assembly F. A multisegment rod CR is then formed in which individual segments are enclosed; the multisegment rod CR travels into an operating zone of a control unit 104 and it is subsequently cut into rods S by means of a cutting head 105 equipped with knives 106. Typical rod supporting and guiding elements have been omitted in the drawing. The machine for producing multisegment rods is equipped with a device 110 for detection of the rotated segments.

Fig. 9 shows the enlarged device for detection 110, indicated as well in fig. 8, comprising a source of radiation 107, a radiation receiver 108 and a controlling unit 111 for generating a signal of an error. The source of radiation is associated with the controlling unit 111 of the device for detection. The controlling unit 111 of the device for detection is associated with an analyzing unit 112. The source of radiation 107 is adapted to illuminate the travelling string of the segments with a laser beam 12, so that on each segment its light profile is formed. As it may be seen in fig. 9, the laser beam 12 may be directed at an angle α to the string of the segments, or it may be perpendicular to the direction of travel of the string of the segments as shown in fig. 8. Moreover, the cross-section of the generated laser beam 12 may have diverse shapes, e.g. it may be a flat beam, an arcuate beam or a beam of a shape of a segment of an ellipse.

In the described embodiment, the source of radiation 107 is a source of laser light. The radiation receiver 108 comprising a photosensitive element may be a camera registering the light profiles of the travelling segments, i.e. the images of the light beams illuminating the individual segments. The radiation receiver 108 receives the radiation reflected by the segments, oriented at an angle β to the direction of travel of the segments. The signals corresponding to the registered light profiles are transferred to the analyzing unit 112 associated with the controlling unit 111; the analyzing unit 112 compares the registered light profiles with a reference profile. The reference profile is a profile corresponding to a non-rotated segment. Both the light profiles formed on the segments and the reference profile may be registered in a form of a series of points represented in a coordinate system, which is easy to analyze by conventional analyzing units.

A signal of an error is generated by the controlling unit 111 each time a difference is detected between the light profile formed on a segment and registered by the receiver 108 and the reference profile. The notion: "a signal of an error is generated by the controlling unit 111" should be understood as referring also to a situation where a signal of an error is generated by the analyzing unit 112. The association of the analyzing unit 112 with the controlling unit 111 makes the operation of these two electronic assemblies closely interrelated.

If a signal of an error corresponding to a given rotated segment is generated, the rod S containing said rotated segment will be rejected by a rejection assembly 109 which is not necessarily located directly downstream the cutting head 105; it may also be located e.g. on a cooperating machine collecting the produced rods.

Referring back to fig. 8, the machine according to the invention is further equipped with the machine controlling unit 113 associated with the controlling unit 111 of the device for detection. In response to the signal of an error received from the controlling unit 111, the machine controlling unit 113 makes each rod containing a rotated segment(s) be rejected by means of the rejection assembly 109.

Figs. 10a, 11a and 12a show views of a flat beam of radiation generated by the device according to the invention, the views being taken along the axis of the string of segments.

As it may be seen in fig. 10a, a laser beam 12 coming from the source of radiation 107 is directed to the lateral surface of a long non-rotated segment 3 travelling along with the wrapping material 103. In this embodiment, the beam 12 is a flat light beam oriented perpendicularly to the axis of the segment 3 and lying in the plane of the drawing. Due to the light beam being directed to the lateral surface of the segment 3, a light profile 13A is formed on said lateral surface. Only the light profile 13A of the lateral surface of the non-rotated segment 3 is visible in the field of vision 14 of the radiation receiver 108. As mentioned above, such a profile may be considered the reference profile.

Fig. 11a shows, similarly to fig. 10a, a flat laser beam 12 striking the lateral surface of a short rotated segment 2B at right angles. Consequently, a light profile 13B of said lateral surface is formed thereon. The light profile 13B of the lateral surface of the segment 2B is visible in the field of vision 14 of the radiation receiver 108.

In fig. 12a, a flat laser beam 12 strikes the lateral surface of a short segment 2C at right angles. The segment 2C is rotated but differently than in fig. 11a; it is oriented transversally to the direction of travel of the string of the segments. As a consequence, a light profile 13C of the lateral surface of the segment 2C is formed thereon and it has a shape of a straight line segment. The light profile 13C of the lateral surface of the segment 2C is visible in the field of vision 14 of the radiation receiver 108.

Fig. 13a schematically shows a top view taken transversally to the axis of the string of the segments, of a light profile formed by an elliptical light beam striking a non-rotated segment. The elliptical light beam should be directed at an angle a ranging from 30° to 60° to the direction of travel of the string of the segments. In this case, the light profile has a shape of a segment of an ellipse in top view. For a certain angle α it is possible to position the radiation receiver at such an angle β that the light profile formed on a non-rotated segment has a shape of a straight line segment i.e. it is "visible" to the receiver as a straight line segment. A man skilled in the art will be able to select a suitable ellipse for a segment of a given diameter and suitable angles α and β. Preferably, both angles are 45° as shown in fig. 9, and the major axis of the ellipse equals the diameter of the segment.

Fig. 13b shows the light profile formed in the above described situation on the non-rotated segment of fig. 13a, the profile being registered by the receiver. In the case of a rotated segment, the light profile 15B registered by the receiver may have an elliptical shape or it may have a shape that is a combination of an arc or an ellipse and a line segment (as shown in fig. 13c), or else some curve that is hard to define. Such a curve may be easily distinguished by the analyzing unit if the reference profile is a straight line segment.

## Claims

1. A method of detection of rotated segments (2A, 2B)in a non-wrapped string of segments (2, 3, 4, 5) conveyed one after another in a machine used in tobacco industry, the method comprising using a source of radiation (107) for illuminating the segments (2, 2A, 2B,3, 4, 5) and a receiver (108) of the radiation reflected by the segments (2, 2A, 2B, 3, 4, 5), the method further comprising generating a signal of an error by means of a controlling unit (111) in case of detection of a rotated segment (2A, 2B), wherein the conveyed string of the segments (2, 3, 4, 5) is illuminated by a laser beam (12) so that on each segment (2, 2A, 2B, 3, 4, 5) its light profile (13A, 13B, 13C) is formed, an image of said light profile (13A, 13B, 13C) being registered by means of the radiation receiver (108), and wherein the light profile (13A, 13B, 13C) formed on each segment (2, 2A, 2B, 3, 4, 5) is compared with a defined reference profile by means of an analyzing unit (112) and the signal of an error is generated in each case where a difference between the registered light profile (13A, 13B, 13C) and said reference profile is detected.

2. The method according to claim 1, **characterized in that** the string of the segments (2, 3, 4, 5) is illuminated by a laser beam (12) having a shape selected from a group comprising a flat beam, a beam having an arcuate cross-section and a beam of a shape of a segment of an ellipse.

3. The method according to claim 1 or 2, **characterized in that** the string of the segments (2,3, 4, 5) is illuminated by a laser beam (12) that is perpendicular to the direction of travel of the string of the segments (2, 3, 4, 5).

4. The method according to claim 1 or 2, **characterized in that** the string of the segments (2, 3, 4, 5) is illuminated by a laser beam (12) that is oriented at an angle to the direction of travel of the string of the segments (2, 3, 4, 5) .

5. The method according to claim 1, **characterized in that** the string of the segments (2, 3, 4, 5) is illuminated by a laser beam (12) having an elliptical shape, the laser beam (12) being oriented at an angle between 30° a 60° to the direction of travel of the string of the segments (2, 3, 4, 5), the radiation receiver (108) registering the radiation reflected by each segment (2, 2A, 2B, 3, 4, 5) at an angle between 30° and 60° to the direction of travel of the string of the segments (2, 3, 4, 5).

6. The method according to claim 1, **characterized in that** the string of the segments (2, 3, 4, 5) is illuminated by a laser beam (12) having an elliptical shape, the laser beam (12) being oriented at an angle of 45° to the direction of travel of the string of the segments (2, 3, 4, 5), the radiation receiver (108) registering the radiation reflected by each segment (2, 2A, 2B, 3, 4, 5) at an angle of 45° to the direction of travel of the string of the segments (2, 3, 4, 5).

7. The method according to claim 1, **characterized in that** the image of the light profiles (13A, 13B, 13C) of the segments (2, 2A, 2B, 3, 4, 5) is registered by means of a camera.

8. A device (110) for detection of rotated segments (2A, 2B) in a non-wrapped string of segments (2, 3, 4, 5) conveyed one after another in a machine used in tobacco industry, the device (110) comprising a source of radiation (107), a receiver (108) of the radiation reflected by the segments (2, 2A, 2B, 3, 4, 5) and a controlling unit (111) for generating a signal of an error, wherein the source of radiation (107) is adapted to illuminate the conveyed string of the segments (2, 2A, 2B, 3, 4, 5) by a laser beam (12) so that on each segment (2, 2A, 2B, 3, 4, 5) its light profile (13A, 13B, 13C) is formed, and wherein the radiation receiver (108) is adapted to register the image of said light profile (13A, 13B, 13C) formed on each segment (2, 2A, 2B, 3, 4, 5), the controlling unit (111) being associated with an analyzing unit (112) adapted to compare the light profile (13A, 13B, 13C) formed on each segment (2, 2A, 2B, 3, 4, 5) with a defined reference profile and the controlling unit (111) being adapted to generate a signal of an error in each case where a difference between the registered light profile (13A, 13B, 13C) and said reference profile is detected.

9. The device (110) according to claim 8, **characterized in that** the source of radiation (107) is adapted to generate a laser beam (12) having a shape selected from a group comprising a flat beam, a beam having an arcuate cross-section and a beam of a shape of a segment of an ellipse.

10. The device (110) according to claim 8 or 9, **characterized in that** he source of radiation (107) is adapted to generate a laser beam (12) that is perpendicular to the direction of travel of the string of the segments (2, 3, 4, 5).

11. The device (110) according to claim 8 or 9, **characterized in that** that the source of radiation (107) is adapted to generate a laser beam (12) oriented at an angle to the direction of travel of the string of the segments (2, 3, 4, 5) .

12. The device (110) according to claim 8, **characterized in that** the source of radiation (107) is adapted to generate a laser beam (12) having an elliptical shape, the laser beam (12) being oriented at an angle between 30° and 60° to the direction of travel of the string of the segments, the radiation receiver (108) registering the radiation reflected by each segment at an angle between 30° and 60° to the direction of travel of the segments (2, 3, 4, 5).

13. The device (110) according to claim 8, **characterized in that** the source of radiation (107) is adapted to generate a laser beam (12) having an elliptical shape, the laser beam (12) being oriented at an angle of 45° to the direction of travel of the string of the segments, the radiation receiver (108) registering the radiation reflected by each segment at an angle of 45° to the direction of travel of the string of the segments.

14. The device (110) according to claim 8, **characterized in that** the radiation receiver (108) is a camera.

15. A machine used in tobacco industry for producing multisegment rods (S) comprising:
means for feeding segments (2, 3, 4, 5),
means for feeding a wrapping material (11'),
means for conveying a string of the segments (2, 3, 4, 5) located on the wrapping material (11'),
means for forming an endless multisegment rod (CR, CR1, CR1') by enclosing the string of the segments (2, 3, 4, 5) in the wrapping material (11'),
a cutting assembly for cutting the endless rod (CR, CR1, CR1') into individual multisegment rods (S),
a machine controlling unit (113),
**characterized in that** upstream of the means for forming an endless multisegment rod (CR, CR1, CR1') the device (110) for detection of rotated segments (2A, 2B) according to any of claims 8-14 is provided, the controlling unit (111) of said device (110) for detection being associated with the machine controlling unit (113), the machine being further provided with a rejecting assembly (109) for rejection of the rods (S) containing the detected rotated segments (2A, 2B).

## Patentansprüche

1. Verfahren zum Erfassen von gedrehten Segmenten (2A, 2B) in einem nicht gewickelten Strang von Segmenten (2, 3, 4, 5), die nacheinander in einer in der Tabakindustrie verwendeten Maschine gefördert werden, wobei das Verfahren die Verwendung einer Strahlungsquelle (107) zum Beleuchten der Segmente (2, 2A, 2B, 3, 4, 5) und einen Empfänger (108) der von den Segmenten (2, 2A, 2B, 3, 4, 5) reflektierten Strahlung umfasst, wobei das Verfahren ferner das Erzeugen eines Fehlersignals mittels einer Steuereinheit (111) im Falle der Erkennung eines gedrehten Segments (2A, 2B) umfasst, wobei der geförderte Strang der Segmente (2, 3, 4, 5) durch einen Laserstrahl (12) so beleuchtet wird, dass auf jedem Segment (2, 2A, 2B, 3, 4, 5) sein Lichtprofil (13A, 13B, 13C) abgebildet wird, wobei das Bild des Lichtprofils (13A, 13B, 13C) mittels des Strahlungsempfängers (108) ermittelt wird, und wobei das Lichtprofil (13A, 13B, 13C), das auf jedem Segment (2, 2A, 2B, 3, 4, 5) abgebildet wird, mit einem definierten Referenzprofil mittels einer Analyseeinheit (112) verglichen wird und das Fehlersignal in jedem Fall erzeugt wird, wenn eine Differenz zwischen dem registrierten Lichtprofil (13A, 13B, 13C) und dem Referenzprofil erfasst wird.

2. Verfahren nach Anspruch 1, **dadurch gekennzeichnet, dass** der Strang der Segmente (2, 3, 4, 5) durch einen Laserstrahl (12) mit einer Form, ausgewählt aus einer Gruppe, die einen flachen Strahl, einen Strahl mit einem bogenförmigen Querschnitt und einen Strahl in der Form eines Ausschnitts einer Ellipse umfasst, beleuchtet wird.

3. Verfahren nach Anspruch 1 oder 2, **dadurch gekennzeichnet, dass** der Strang der Segmente (2, 3, 4, 5) durch einen Laserstrahl (12) beleuchtet wird, der senkrecht zur Bewegungsrichtung des Strangs der Segmente (2, 3, 4, 5) ist.

4. Verfahren nach Anspruch 1 oder 2, **dadurch gekennzeichnet, dass** der Strang der Segmente (2, 3, 4, 5) von einem Laserstrahl (12) beleuchtet wird, der in einem Winkel zur Bewegungsrichtung des Strangs der Segmente (2, 3, 4, 5) ausgerichtet ist.

5. Verfahren nach Anspruch 1, **dadurch gekennzeichnet, dass** der Strang der Segmente (2, 3, 4, 5) durch einen Laserstrahl (12) mit elliptischer Form beleuchtet wird, wobei der Laserstrahl (12) unter einem Winkel zwischen 30° und 60° zur Bewegungsrichtung des Strangs der Segmente (2, 3, 4, 5) ausgerichtet ist, wobei der Strahlungsempfänger (108) die von jedem Segment (2, 2A, 2B, 3, 4, 5) reflektierte Strahlung in einem Winkel zwischen 30° und 60° zur Bewegungsrichtung des Strangs der Segmente (2, 3, 4, 5) ermittelt.

6. Verfahren nach Anspruch 1, **dadurch gekennzeichnet, dass** der Strang der Segmente (2, 3, 4, 5) von einem Laserstrahl (12) mit elliptischer Form beleuchtet wird, wobei der Laserstrahl (12) unter einem Winkel von 45° zur Bewegungsrichtung des Strangs der Segmente (2, 3, 4, 5) ausgerichtet ist, wobei der Strahlungsempfänger (108) die von jedem Segment (2, 2A, 2B, 3, 4, 5) reflektierte Strahlung in einem Winkel von 45° zur Bewegungsrichtung des Strangs der Segmente (2, 3, 4, 5) ermittelt.

7. Verfahren nach Anspruch 1, **dadurch gekennzeichnet, dass** das Bild der Lichtprofile (13A, 13B, 13C) der Segmente (2, 2A, 2B, 3, 4, 5) mittels einer Kamera erfasst wird.

8. Vorrichtung (110) zum Erfassen von gedrehten Segmenten (2A, 2B) in einem nicht gewickelten Strang von Segmenten (2, 3, 4, 5), die nacheinander in einer in der Tabakindustrie verwendeten Maschine gefördert werden, wobei die Vorrichtung (110) eine Strahlungsquelle (107), einen Empfänger (108) der von den Segmenten (2, 2A, 2B, 3, 4, 5) reflektierten Strahlung umfasst, und eine Steuereinheit (111) zum Erzeugen eines Fehlersignals, wobei die Strahlungsquelle (107) dazu angepasst, den geförderten Strang der Segmente (2, 2A, 2B, 3, 4, 5) durch einen Laserstrahl (12) so zu beleuchten, dass auf jedem Segment (2, 2A, 2B, 3, 4, 5) sein Lichtprofil (13A, 13B, 13C) abgebildet ist, und wobei der Strahlungsempfänger (108) dazu angepasst ist, das Bild des Lichtprofils (13A, 13B, 13C) zu ermitteln, das auf jedem Segment (2, 2A, 2B, 3, 4, 5) abgebildet ist, wobei die Steuereinheit (111) einer Analyseeinheit (112) zugeordnet ist, die angepasst ist, das Lichtprofil (13A, 13B, 13C), das auf jedem Segment (2, 2A, 2B, 3, 4, 5) abgebildet wird, mit einem definierten Referenzprofil zu vergleichen, und wobei die Steuereinheit (111) dazu angepasst ist, ein Fehlersignal in jedem Fall zu erzeugen, in dem eine Differenz zwischen dem ermittelten Lichtprofil (13A, 13B, 13C) und dem Referenzprofil erfasst wird.

9. Vorrichtung (110) nach Anspruch 8, **dadurch gekennzeichnet, dass** die Strahlungsquelle (107) dazu angepasst ist, einen Laserstrahl (12) mit einer Form zu erzeugen, ausgewählt aus einer Gruppe, die einen flachen Strahl, einen Strahl mit einem bogenförmigen Querschnitt und einen Strahl in der Form eines Ausschnitts einer Ellipse umfasst.

10. Vorrichtung (110) nach Anspruch 8 oder 9, **dadurch gekennzeichnet, dass** die Strahlungsquelle (107) dazu angepasst ist, einen Laserstrahl (12) zu erzeugen, der senkrecht zur Bewegungsrichtung des Strangs der Segmente (2, 3, 4, 5) ist.

11. Vorrichtung (110) nach Anspruch 8 oder 9, **dadurch gekennzeichnet, dass** die Strahlungsquelle (107) dazu angepasst ist, einen Laserstrahl (12) zu erzeugen, der unter einem Winkel zur Bewegungsrichtung des Strangs der Segmente (2, 3, 4, 5) ausgerichtet ist.

12. Die Vorrichtung (110) nach Anspruch 8, **dadurch gekennzeichnet, dass** die Strahlungsquelle (107) dazu angepasst ist, einen Laserstrahl (12) mit elliptischer Form zu erzeugen, wobei der Laserstrahl (12) unter einem Winkel zwischen 30° und 60° zur Bewegungsrichtung des Strangs der Segmente ausgerichtet ist, wobei der Strahlungsempfänger (108) die von jedem Segment reflektierte Strahlung unter einem Winkel zwischen 30° und 60° zur Bewegungsrichtung der Segmente (2, 3, 4, 5) ermittelt.

13. Die Vorrichtung (110) nach Anspruch 8, **dadurch gekennzeichnet, dass** die Strahlungsquelle (107) dazu angepasst ist, einen Laserstrahl (12) mit elliptischer Form zu erzeugen, wobei der Laserstrahl (12) unter einem Winkel von 45° zur Bewegungsrichtung des Strangs der Segmente ausgerichtet ist, wobei der Strahlungsempfänger (108) die von jedem Segment reflektierte Strahlung unter einem Winkel von 45° zur Bewegungsrichtung des Strangs der Segmente ermittelt.

14. Die Vorrichtung (110) nach Anspruch 8, **dadurch gekennzeichnet, dass** der Strahlungsempfänger (108) eine Kamera ist.

15. Maschine, die in der Tabakindustrie zur Herstellung von Multisegment-Stangen (S) eingesetzt wird, umfassend:
Mittel zum Zuführen von Segmenten (2, 3, 4, 5),
Mittel zum Zuführen eines Verpackungsmaterials (11'),
Mittel zum Transportieren eines Strangs der Segmente (2, 3, 4, 5), die sich auf dem Verpackungsmaterial (11') befinden, Mittel zum Bilden einer endlosen Multisegmentstange (CR, CR1, CR1') durch Umschlingen des Strangs der Segmente (2, 3, 4, 5) mit Verpackungsmaterial (11'),
eine Schneidanordnung zum Schneiden der Endlosstange (CR, CR1, CR1') in einzelne Multisegmentstangen (S),
eine Maschinensteuereinheit (113),
**dadurch gekennzeichnet, dass** stromaufwärts der Mittel zum Bilden einer endlosen Multisegmentstange (CR, CR1, CR1, CR1') die Vorrichtung (110) zum Erfassen von gedrehten Segmenten (2A, 2B) nach einem der Ansprüche 8-14 vorgesehen ist, wobei die Steuereinheit (111) der Vorrichtung (110) zum Erfassen der Maschinensteuereinheit (113) zugeordnet ist, wobei die Maschine ferner mit einer Aussortierungsanordnung (109) zum Aussortieren der die erfassten gedrehten Segmente (2A, 2B) enthaltenden Stangen (S) versehen ist.

## Revendications

1. Une méthode de détection de segments tournés (2A, 2B) dans une chaine de segments non-enveloppés (2, 3, 4, 5) transportés les uns après les autres dans une machine utilisée dans l'industrie du tabac, la méthode comprenant l'utilisation d'une source de rayonnement (107) pour éclairer les segments (2, 2A, 2B, 3, 4, 5) et d'un récepteur (108) du rayonnement réfléchi par les segments (2, 2A, 2B, 3, 4, 5), la méthode comprenant en outre la génération d'un signal d'erreur au moyen d'une unité de commande (111) en cas de détection d'un segment tourné (2A, 2B), dans laquelle la chaîne transportée des segments (2, 3, 4, 5) est éclairée par un faisceau laser (12) de sorte que, sur chaque segment (2, 2A, 2B, 3, 4, 5), son profil de lumière (13A, 13B, 13C) est formé, une image dudit profil de lumière (13A, 13B, 13C) étant enregistrée au moyen du récepteur de rayonnement (108), et dans laquelle le profil de lumière (13A, 13B, 13C) formé sur chaque segment (2, 2A, 2B, 3, 4, 5) est comparé à un profil de référence défini au moyen d'une unité d'analyse (112) et le signal d'une erreur est généré dans chaque cas où une différence entre le profil de lumière enregistré (13A, 13B, 13C) et ledit profil de référence est détectée.

2. La méthode selon la revendication 1, **caractérisée en ce que** la chaîne des segments (2, 3, 4, 5) est éclairée par un faisceau laser (12) de forme choisie dans un groupe comprenant un faisceau plat, un faisceau de section transversale en forme d'arc et un faisceau en forme de segment d'ellipse.

3. La méthode selon la revendication 1 ou 2, **caractérisée en ce que** la chaîne des segments (2, 3, 4, 5) est éclairé par un faisceau laser (12) qui est perpendiculaire à la direction de déplacement de la chaîne de segments (2, 3, 4, 5).

4. La méthode selon la revendication 1 ou 2, **caractérisée en ce que** la chaîne des segments (2, 3, 4, 5) est éclairé par un faisceau laser (12) qui est orienté selon un angle à la direction de déplacement de la chaîne de segments (2, 3, 4, 5).

5. La méthode selon la revendication 1, **caractérisée en ce que** la chaîne des segments (2, 3, 4, 5) est éclairée par un faisceau laser (12) de forme elliptique, le faisceau laser (12) étant orienté selon un angle entre 30° et 60° par rapport à la direction de déplacement de la chaîne des segments (2, 3, 4, 5), le récepteur de rayonnement (108) enregistrant le rayonnement réfléchi par chaque segment (2, 2A, 2B, 3, 4, 5) selon un angle entre 30° et 60° par rapport à la direction de déplacement de la chaîne des segments (2, 3 , 4, 5).

6. La méthode selon la revendication 1, **caractérisée en ce que** la chaîne des segments (2, 3, 4, 5) est éclairée par un faisceau laser (12) de forme elliptique, le faisceau laser (12) étant orienté selon un angle de 45° par rapport à la direction de déplacement de la chaîne des segments (2, 3, 4, 5), le récepteur de rayonnement (108) enregistrant le rayonnement réfléchi par chaque segment (2, 2A, 2B, 3, 4, 5) selon un angle entre 30° de 45° par rapport à la direction de déplacement de la chaîne des segments (2, 3, 4, 5) .

7. La méthode selon la revendication 1, **caractérisée en ce que** l'image des profils de lumière (13A, 13B, 13C) des segments (2, 2A, 2B, 3, 4, 5) est enregistrée au moyen d'un appareil photo.

8. Un dispositif (110) de détection de segments tournés (2A, 2B) dans une chaine de segments non-enveloppés (2, 3, 4, 5) transportés les uns après les autres dans une machine utilisée dans l'industrie du tabac, le dispositif (110) comprenant une source de rayonnement (107), un récepteur (108) du rayonnement réfléchi par les segments (2, 2A, 2B, 3, 4, 5) et une unité de commande (111) pour générer un signal d'erreur, la source de rayonnement (107) étant adaptée pour éclairer la chaine transportée des segments (2, 2A, 2B, 3, 4, 5) par un faisceau laser (12) de sorte que sur chaque segment (2, 2A, 2B, 3 , 4, 5) son profil de lumière (13A, 13B, 13C) est formé, et dans lequel le récepteur de rayonnement (108) est adapté pour enregistrer l'image dudit profil de lumière (13A, 13B, 13C) formé sur chaque segment (2, 2A, 2B, 3, 4, 5), l'unité de commande (111) étant associée à une unité d'analyse (112) adaptée pour comparer le profil de lumière (13A, 13B, 13C) formé sur chaque segment (2, 2A, 2B, 3, 4, 5) avec un profil de référence défini et l'unité de commande (111) étant adaptée pour générer un signal d'erreur dans chaque cas où une différence entre le profil de lumière enregistré (13A, 13B, 13C) et ledit profil de référence est détectée.

9. Le dispositif (110) selon la revendication 8, **caractérisé en ce que** la source de rayonnement (107) est adaptée pour générer un faisceau laser (12) de forme choisie dans un groupe comprenant un faisceau plat, un faisceau de section transversale en forme d'arc et un faisceau en forme de segment d'ellipse.

10. Le dispositif (110) selon la revendication 8 ou 9, **caractérisé en ce que** la source de rayonnement (107) est adaptée pour générer un faisceau laser (12) qui est perpendiculaire à la direction de déplacement de la chaîne de segments (2, 3, 4, 5) .

11. Le dispositif (110) selon la revendication 8 ou 9, **caractérisé en ce que** la source de rayonnement (107) est adaptée pour générer un faisceau laser (12) orienté selon un angle par rapport à la direction de déplacement de la chaîne de segments (2, 3, 4, 5).

12. Le dispositif (110) selon la revendication 8, **caractérisé en ce que** la source de rayonnement (107) est adaptée pour générer un faisceau laser (12) de forme elliptique, le faisceau laser (12) étant orienté selon un angle entre 30° et 60° par rapport à la direction de déplacement de la chaîne des segments, le récepteur de rayonnement (108) enregistrant le rayonnement réfléchi par chaque segment selon un angle entre 30° de 60° par rapport à la direction de déplacement des segments (2, 3, 4, 5) .

13. Le dispositif (110) selon la revendication 8, **caractérisé en ce que** la source de rayonnement (107) est adaptée pour générer un faisceau laser (12) de forme elliptique, le faisceau laser (12) étant orienté selon un angle de 45° par rapport à la direction de déplacement de la chaîne des segments, le récepteur de rayonnement (108) enregistrant le rayonnement réfléchi par chaque segment selon un angle de 45° par rapport à la direction de déplacement de la chaîne des segments.

14. Le dispositif (110) selon la revendication 8, **caractérisé en ce que** le récepteur de rayonnement (108) est un appareil photo.

15. Une machine utilisée dans l'industrie du tabac pour produire des tiges multi-segments (S) comprenant:
des moyens pour alimenter des segments (2, 3, 4, 5),
des moyens pour alimenter un matériau d'enveloppement (11'),
des moyens pour transporter une chaîne des segments (2, 3, 4, 5) situés sur le matériau d'enveloppement (11'),
des moyens pour former une tige multi-segment sans fin (CR, CR1, CR1') en enfermant la chaîne des segments (2, 3, 4, 5) dans le matériau d'enveloppement (11'),
un ensemble de coupe pour couper la tige sans fin (CR, CR1, CR1') en tiges multi-segments individuelles (S),
une unité de commande (113) de machine,
**caractérisée en ce qu'en** amont des moyens pour former une tige multi-segment sans fin (CR, CR1, CR1') est prévu le dispositif (110) de détection de segments tournés (2A, 2B) selon l'une quelconque des revendications 8-14, l'unité de commande (111) dudit dispositif (110) de détection étant associée à l'unité de commande (113) de machine, la machine étant en outre équipée d'un ensemble de rejet (109) pour rejeter les tiges (S) contenant les segments tournés (2A, 2B) détectés.
